# EUROPÄISCHE PATENTANMELDUNG

(11) **EP 2 573 709 A2**
(43) Veröffentlichungstag der Anmeldung: **27.03.2013**
(21) Anmeldenummer: 12181674.8
(22) Anmeldetag: 24.08.2012
(51) Int. Cl.: G06K 9/00

(54) **Verfahren und Vorrichtung zur Identifikation von Kraftfahrzeugen zur Verkehrsüberwachung**

(30) Priorität: 26.08.2011 DE 102011053052
(71) Anmelder: JENOPTIK Robot GmbH, 40789 Monheim am Rhein (DE)
(72) Erfinder: Lehning, Michael, 31137 Hildesheim (DE)
(74) Vertreter: Freitag, Joachim

(57) **Zusammenfassung**

Die Erfindung betrifft ein Verfahren und eine Vorrichtung zur Identifikation von Kraftfahrzeugen zur Verkehrsüberwachung.

Die Aufgabe, eine Erfassung von zur Identifikation eines Kraftfahrzeugs (13) geeigneten Merkmalen mit geringstem materiellen Aufwand und eine Kraftfahrzeugidentifikation unabhängig von der exakten Ausrichtung der Vorrichtung zu ermöglichen, wird erfindungsgemäß erreicht, indem die Bildauswertungseinheit (BA) Mittel zur Feststellung der Größenverhältnisse einer Nummernschildkontur (21) im perspektivisch verzerrten Bild (20) auf Basis von gespeicherten genormten Nummernschildformaten, Mittel zur Feststellung der Größe der perspektivischen Verzerrung der Nummernschildkontur (21) anhand des zugeordneten genormten Nummernschildformats, Mittel zum Erstellen einer Berechnungsvorschrift zum perspektivischen Entzerren auf Basis der ermittelten Verzerrung der Nummernschildkontur (21) gegenüber dem zugeordneten Nummernschildformat sowie Mittel zum Entzerren der extrahierten nummernschildbesetzten Kraftfahrzeugansicht (14) aufweist.

## Beschreibung

Die Erfindung betrifft ein Verfahren und eine Vorrichtung zur Identifikation von Kraftfahrzeugen zur Verkehrsüberwachung.

Für die Erfassung oder Identifizierung von Kraftfahrzeugen im fließenden Verkehr sind zahlreiche Methoden bekannt. Dazu existiert eine breite Palette an sensorischen Möglichkeiten, mit denen Kraftfahrzeuge anhand verschiedener Merkmale erkannt werden können. Eine weites Gebiet nimmt dabei die Identifizierung anhand äußerer Merkmale ein. In einer speziellen Form werden solche Merkmale aus Kraftfahrzeugkonturen ermittelt. Diese werden aus Profilaufnahmen von Lichtschrankensystemen oder aus Abbildungen von über der Fahrbahn angebrachten Video- oder Fotosystemen gewonnen. Durch die Auswertung von Merkmalen der Fahrzeugfront oder anderer geeigneter Ansichten von Kraftfahrzeugen ist es somit möglich, Fahrzeuge zu unterscheiden.

Häufig werden bildbasierte Identifizierungssysteme auch mit einer Erkennung des Nummernschilds kombiniert, bei denen die Registriernummer des Kraftfahrzeugs mit einer Zeichenerkennung (OCR) aus einer Abbildung der Front - oder Rückansicht ermittelt wird. Es werden auch Systeme verwendet, die ausschließlich mit der Nummernschilderkennung arbeiten. Das Ermitteln der Registriernummer kann aber unter Umständen mit Fehlern behaftet sein, die zum Beispiel aus der fehlerhaften Erkennung einzelner Zeichen von sehr ähnlichen Registriernummern hervorgehen. Aus diesem Grund ist die Anwendung zusätzlicher Systeme sinnvoll, mit denen sich Kraftfahrzeuge anhand weiterer Merkmale identifizieren lassen. Ein solches System kann beispielsweise auf einer Konturerkennung basieren, bei dem die Übereinstimmung eines aktuell erstellten und eines bereits vorhandenen Bildes eines Kraftfahrzeugs geprüft wird und anhand der größten Ähnlichkeit eine Identifikation erfolgt.

In der Patentschrift EP 1 997 090 B1 wird mit einer neben der Fahrspur positionierten Kamera die dreidimensionale Form eines bewegten Fahrzeugs aus mehreren aufeinanderfolgenden Aufnahmen ermittelt. Mit der ermittelten Form erfolgt dann durch einen Vergleich mit Formen aus einer bereits angelegten Datenbank die Identifikation des Fahrzeugtyps. Nachteilig hierbei ist, dass für die Ermittlung des Fahrzeugtyps mehrere Aufnahmen benötigt werden und das die Aufnahmen, übereinstimmend mit der Position, in der die Vergleichsbilder der Datenbank erstellt wurden, erfolgen müssen.

Eine weitere Variante des Erfassens und der Identifikation von Merkmalen eines Fahrzeugs wird in der EP 2 320 384 A1 aufgezeigt. Hier werden ebenfalls in der von einer Kamera aufgenommen Abbildung eines Fahrzeugs, ein oder mehrere charakteristische Merkmale des Fahrzeugs ermittelt. Diese werden mit nicht näher beschriebenen Methoden der Bildverarbeitung zur Ermittlung von Hell-/Dunkelbereichen oder der Berechnung von Kontrast-, Helligkeits- oder Farbwert-Quersummen erfasst. Anhand dieser Merkmale wird dann eine bereits vorhandene, kategorisierte Referenzabbildung aus einer Datenbank durch Ähnlichkeitsbewertung ermittelt. Bei hinreichender Übereinstimmung erfolgt eine Kategorisierung des aufgenommenen Fahrzeugs entsprechend der klassifizierten Referenzabbildung. Es wird aber eingeräumt, dass Ungenauigkeiten der Sensorik unter unterschiedlichen Beleuchtungsverhältnissen zu Fehlern bei der Auswertung anhand einer einzelnen Aufnahme führen können und es deshalb sinnvoll ist, die Bewertung anhand mehrerer Bilder oder ergänzt durch weitere Sensoren durchzuführen. Es muss also unterstellt werden, dass die Erfassung der gewählten charakteristischen Merkmale erheblich von Witterungs-, Lichteinflüssen und abweichenden Winkelverhältnissen der Bildaufnahme abhängig ist und somit zur eindeutigen Fahrzeugidentifizierung stets eine Kombination mehrerer Bildsensoren erforderlich ist.

Aufgabe der Erfindung ist es, eine Möglichkeit zu finden, die eine Erfassung von zur Identifikation eines Kraftfahrzeugs geeigneten Merkmalen mit geringstem materiellen Aufwand (Anzahl der Kameras und Auswertungsaufwand) gestattet. Eine erweiterte Aufgabe besteht darin, die Kraftfahrzeugidentifikation unabhängig von einer exakten Ausrichtung der Kamerakonfiguration zu gestalten.

Diese Aufgabe wird gelöst durch ein Verfahren zur Identifikation von Kraftfahrzeugen zur Verkehrüberwachung mit den folgenden Schritten:
a) Aufnehmen eines perspektivischen Bildes eines Kraftfahrzeugs unter einem spitzen Winkel zur Fahrspur, wobei das Bild mindestens eine Ansicht eines Kraftfahrzeugs enthält, die ein Nummerschild aufweist,
b) Erkennen des Nummernschilds im aufgenommenen Bild und Erfassen einer Nummernschildkontur,
c) Ermitteln des Formats der Nummernschildkontur aus dem Vergleich der Eckpunkte der Nummernschildkontur mit gespeicherten genormten Nummernschildformaten ,
d) Ermitteln einer Berechnungsvorschrift zum perspektivischen Entzerren der Nummernschildkontur anhand des zugeordneten genormten Nummernschildformats,
e) Erzeugen eines die Nummernschildkontur umgebenden, angepasst perspektivisch verzerrten Bildbereichs mit einer vorgegebenen Vergrößerung in Abhängigkeit vom ermittelten Format der Nummernschildkontur,
f) Extrahieren des Inhalts des verzerrten umgebenden Bildbereichs und Verwerfen des restlichen Bildes des Kraftfahrzeugs,
g) Adaptieren einer aus dem verzerrten umgebenden Bildbereich extrahierten, nummernschildbesetzten Kraftfahrzeugansicht an das Format von in einer Datenbank gespeicherten Referenzbildern,
h) Entzerren der Kraftfahrzeugansicht mittels der aus der Nummernschildkontur ermittelten Berechnungsvorschrift,
i) Ähnlichkeitsvergleich der erfassten Konturen und deren Lage mit denen von Referenzbildern aus der Datenbank und Erkennen der größten Übereinstimmung der erfassten Konturen zu einem der Referenzbilder,
j) Einordnen des aufgenommenen Kraftfahrzeugs in eine Kraftfahrzeugklasse, der das Referenzbild mit der größten Übereinstimmung zugeordnet war, und Ausgeben der Kraftfahrzeugklasse.

Unter Identifikation ist dabei eine Einordnung der erfassten Kraftfahrzeuge in vorher definierte, typische Kraftfahrzeugklassen zu verstehen. Eine Identifizierung beispielsweise anhand von Kraftfahrzeugtypen ist nicht Inhalt der bevorzugten Ausführung des Verfahrens, ist aber grundsätzlich durch Einfügung ergänzender Verfahrensschritte möglich.

Vorteilhaft wird bei der Erzeugung des Bildbereichs in Verfahrensschritt e) dessen Größenverhältnis und Lage gegenüber der Nummernschildkontur aus dem ermittelten genormten Nummernschildformat abgeleitet.

Bei einer erfindungsgemäßen Ausgestaltung werden nach dem Extrahieren des verzerrten umgebenden Bildbereichs charakteristische Merkmale in Form von Konturen innerhalb der extrahierten Kraftfahrzeugansicht erfasst.

In einer zweckmäßigen Ausgestaltung wird zum Ähnlichkeitsvergleich der erfassten Konturen mit den Referenzbildern im Verfahrensschritt j) ein Korrelationsverfahren eingesetzt.

In einer Variante des Verfahrens werden im Verfahrensschritt j) zum Ähnlichkeitsvergleich der erfassten Konturen mit den gespeicherten Referenzbildern die Lagen, Abstände und Größenverhältnisse der Konturen gegenüber der Nummernschildkontur verglichen.

In einer speziellen Ausgestaltung erfolgt die Bildaufnahme in Verfahrensschritt a) unter einem seitlichen Winkel zur Fahrspur in einer perspektivischen Ansicht des Kraftfahrzeugs.

In einer weiteren Ausgestaltung erfolgt die Bildaufnahme in Verfahrensschritt a) unter einem Höhenwinkel zur Fahrspur in einer perspektivischen Ansicht des Kraftfahrzeugs.

In einer vorteilhaften Variante wird der Winkel zwischen der Fahrspur und der Bilderfassungseinrichtung maximal so groß gewählt, dass die nummernschildbesetzte Kraftfahrzeugansicht noch eine hinreichend große Fläche der Nummernschildkontur aufweist, die eine eindeutige Zuordnung der genormten Nummernschildformate gestattet und somit eine Unabhängigkeit der perspektivischen Entzerrung von der genauen Kenntnis der Winkel der Bildaufnahme zur Fahrspur des Kraftfahrzeugs erreicht.

Zweckmäßig werden als erfasste Konturen Umrisse aus der Gruppe von konstruktiven Elementen, wie Scheinwerfer, Kühlerlufteinlässe, Stoßstangen, Karosserieabdeckungen, -hauben, -blenden und -kanten verwendet.

In einer weiteren vorteilhaften Variante werden für die Ermittlung des genormten Nummernschildformats zusätzlich zur Nummernschildkontur die Lage und Größe der Beschriftung des Nummernschilds erfasst.

In einer speziellen Ausführung wird zusätzlich zur Nummernschildkontur die Registriernummer des aufgenommenen Nummernschilds erfasst, einem OCR-Verfahren unterzogen und für die Verfolgung eines Verkehrsverstoßes gespeichert.

In einer weiteren Ausführung werden zusätzlich zur Bildaufnahme noch weitere Messdaten im Zusammenhang mit einem Verkehrsverstoß, Datum und Uhrzeit gleichzeitig erfasst und mit Bezug auf das aufgenommene Bild des Kraftfahrzeugs gespeichert, indem diese Daten in einer Scriptzeile direkt im Bild oder in einem Datencontainer innerhalb der Bilddatei abgelegt werden.

Des Weiteren wird die Aufgabe gemäß der Erfindung bei einer Vorrichtung zur Identifikation von Kraftfahrzeugen zur Verkehrsüberwachung mit einer Bilderfassungseinrichtung, einer Bildauswertungseinheit mit Speicher, einer Bildvergleichseinheit, einer Datenbank mit Referenzbildern und einer Ausgabeeinheit, wobei die Bilderfassungseinrichtung zur Aufnahme eines Bildes des Kraftfahrzeugs mit mindestens einer Kraftfahrzeugansicht, die ein Nummernschild aufweist, ausgerichtet ist, die Bildauswertungseinheit Mittel zum Erkennen des Nummernschilds, Mittel zum Abtrennen des Bildhintergrunds und Extrahieren einer relevanten Kraftfahrzeugansicht vom aufgenommenen Bild und Mittel zum Erfassen charakteristischer Merkmale innerhalb der extrahierten Kraftfahrzeugansicht enthält, die Bildvergleichseinheit Mittel zum Ähnlichkeitsvergleich der charakteristischen Merkmale der extrahierten Kraftfahrzeugansicht mit denen von Referenzbildern aus der Datenbank, Mittel zum Erkennen der größten Übereinstimmung der erfassten Kraftfahrzeugansicht zu einem der Referenzbilder und Mittel zum Zuordnen des ermittelten Referenzbildes mit der größten Übereinstimmung zu einer Kraftfahrzeugklasse aufweist, dadurch gelöst, dass die Bildauswertungseinheit weiterhin enthält, Mittel zur Feststellung der Größenverhältnisse einer Nummernschildkontur im perspektivisch verzerrten Bild auf Basis von gespeicherten genormten Nummernschildformaten, Mittel zur Feststellung der Größe der perspektivischen Verzerrung der Nummernschildkontur anhand des zugeordneten genormten Nummernschildformats, Mittel zum Erstellen einer Berechnungsvorschrift zum perspektivischen Entzerren auf Basis der ermittelten Verzerrung der Nummernschildkontur gegenüber dem zugeordneten Nummernschildformat sowie Mittel zum Entzerren der extrahierten nummernschildbesetzten Kraftfahrzeugansicht, wobei die Berechnungsvorschrift zur Entzerrung der Nummernschildkontur zur Entzerrung der gesamten extrahierten nummernschildbesetzten Kraftfahrzeugansicht vorgesehen ist, sodass die perspektivische Entzerrung von der genauen Kenntnis des Winkels der Bildaufnahme zur Fahrspur des Kraftfahrzeugs erreicht wird.

In einer vorteilhaften Ausführung weist die Bildauswertungseinheit Mittel zum Erzeugen eines die Nummernschildkontur umgebenden, angepasst perspektivisch verzerrten Bildbereichs, vorzugsweise eines perspektivisch verzerrten Rechtecks, zur Extraktion der auszuwertenden nummernschildbesetzten Kraftfahrzeugansicht aus dem aufgenommenen Bild auf, wobei die Mittel zum Erzeugen des Bildbereichs eine Einstellung der Größe des Bildbereichs gegenüber der Nummernschildkontur in Abhängigkeit von dem der Nummernschildkontur zugeordneten genormten Nummernschildformat enthalten.

In einer weiteren Variante weist die Bildauswerteeinheit Mittel zur Feststellung von charakteristischen Merkmalen in Form von Konturen innerhalb des erzeugten Bildbereichs auf, wobei das Ergebnis aus dem Mittel zur Feststellung der Konturen den Mitteln zur Entzerrung der extrahierten nummernschildbesetzten Kraftfahrzeugansicht zugeführt wird.

In einer speziellen Ausführung weist die Datenbank typische Referenzbilder für definierte Kraftfahrzeugklassifizierungen nach Klasseneinteilungen aus einer der Gruppen Fahrzeughersteller, Fahrzeugarten und Fahrzeugtypen auf.

In einer besonders vorteilhaften Variante weist die Vorrichtung zusätzlich ein Messsystem zur Geschwindigkeitsfeststellung des Kraftfahrzeugs sowie Mittel zur Erkennung der Registriernummer innerhalb der Nummernschildkontur auf.

Die Erfindung soll nachfolgend anhand von Ausführungsbeispielen näher erläutert werden. In den zugehörigen Zeichnungen zeigen:
- Fig. 1: einen Ablaufplan des erfindungsgemäßen Verfahrens zur Verkehrsüberwachung,
- Fig. 2: eine Anordnung zur erfindungsgemäßen Verwendung des Verfahrens und der Vorrichtung über der Fahrspur,
- Fig. 3: eine Anordnung zur erfindungsgemäßen Verwendung des Verfahrens und der Vorrichtung seitlich zur Fahrspur,
- Fig. 4: ein Beispiel einer Identifizierung eines Kraftfahrzeugs durch das erfindungsgemäße Verfahren und die Vorrichtung aus einer perspektivischen Ansicht von oben,
- Fig. 5: ein Beispiel einer Identifizierung eines Kraftfahrzeugs durch das erfindungsgemäße Verfahren und die Vorrichtung aus einer perspektivischen Ansicht von der Seite,
- Fig. 6: ein Blockschema der erfindungsgemäßen Vorrichtung.

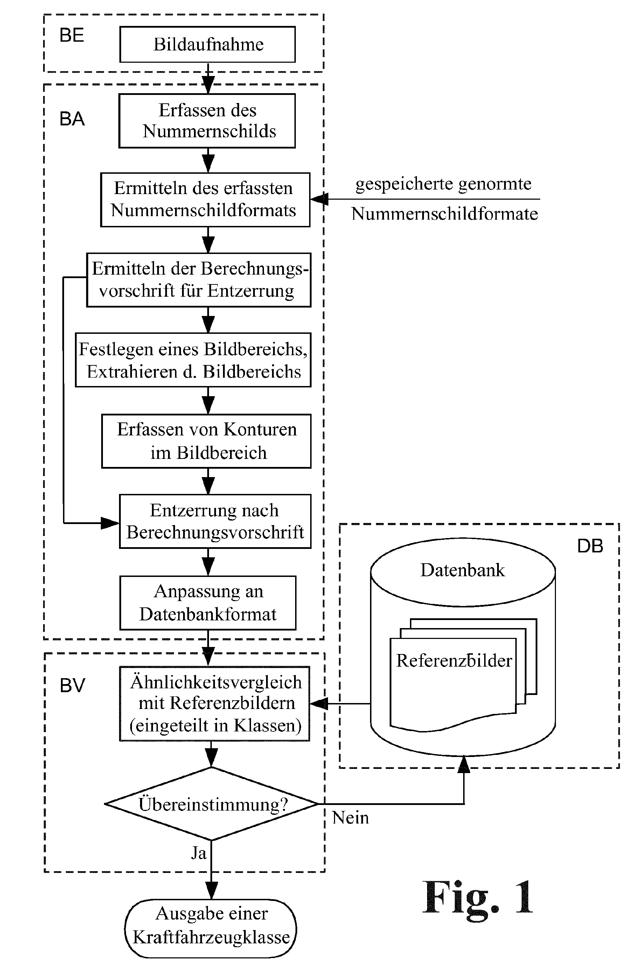

Der Ablauf des Verfahrens erfolgt nach dem in Fig. 1 schematisch dargestellten Verfahrensablauf.

In einem ersten Schritt wird mit einer Bilderfassungseinrichtung BE eine perspektivische Abbildung unter einem spitzen Winkel zur Fahrspur aufgenommen. Diese Abbildung kann eine digitale Einzelaufnahme oder ein einzelnes Bild aus einer Videoaufnahme sein. Ein mit der Bilderfassungseinrichtung BE aufgenommenes Bild 20 des Kraftfahrzeugs 13 kann prinzipiell aus jeder denkbaren Perspektive aufgenommen werden, soweit mindestens eine Kraftfahrzeugansicht 14 des Kraftfahrzeugs 13 mit einem Nummernschild 15 erfasst wird. Zur Vereinfachung der Benennung wird im Folgenden der Begriff "Frontansicht 14" verwendet, jedoch ohne Beschränkung der Allgemeinheit, dass auch die Heckansicht eines Kraftfahrzeugs 13 erfasst werden kann.

In einer Bildauswertungseinheit BA erfolgt in einem zweiten Schritt die Erkennung des Nummernschilds 15 und die Erstellung einer der Nummernschildumrandung entsprechenden Nummernschildkontur in der Frontansicht 14. In einem dritten Schritt wird das genormte Format des Nummernschilds 15 anhand eines Vergleichs der Eckpunkte der Nummernschildkontur 21 und der Eckpunkte von den im Speicher 7 der Bildauswertungseinheit BA hinterlegten Nummernschildformate ermittelt. Im darauf folgenden Schritt kann aus dem Unterschied zwischen dem aufgenommenen, perspektivisch verzerrten und den hinterlegten unverzerrten Nummernschildformaten eine Berechnungsvorschrift zur perspektivischen Entzerrung erstellt werden.

Im nachfolgenden Schritt wird in Bezug zur ermittelten Nummernschildkontur 21 ein, die Nummernschildkontur 21 umgebendes und auf eine vorgegebene Größe vergrößertes Rechteck erzeugt. Der innerhalb des Rechtecks liegende Bildinhalt wird extrahiert und der außerhalb des Rechtecks befindliche Abbildungsinhalt wird verworfen. Innerhalb des extrahierten Bildinhalts werden im anschließenden Schritt in der Frontansicht 14 befindliche Konturen des aufgenommenen Kraftfahrzeugs 13 ermittelt und diese als charakteristische Merkmale des Kraftfahrzeugs 13 in ein Konturbild umgewandelt. Im danach folgenden Schritt wird die auf Konturen 24 reduzierte Frontansicht 14 mittels der aus der Nummernschildkontur 21 erstellten Berechnungsvorschrift perspektivisch entzerrt und in einem weiteren Schritt auf das genormte Datenbankformat der Referenzbilder 30 skaliert. In einer Bildvergleichseinheit BV erfolgt dann im folgenden Schritt ein Ähnlichkeitsvergleich der erfassten Konturen 24 und deren Lage mit denen von Referenzbildern 30 aus der Datenbank DB sowie eine Ermittlung der größten Übereinstimmung zu einem der Referenzbilder 30 der Datenbank DB. Im letzten Schritt wird das erfasste Kraftfahrzeug 13 aufgrund des extrahierten Referenzbildes 30 mit der größten Übereinstimmung und auf Basis der Einordnung aller Referenzbilder 30 in unterschiedlichen Kraftfahrzeugklassen (z. B. Referenzbildklassen 31-34) identifiziert und die zutreffende Kraftfahrzeugklasse ausgegeben.

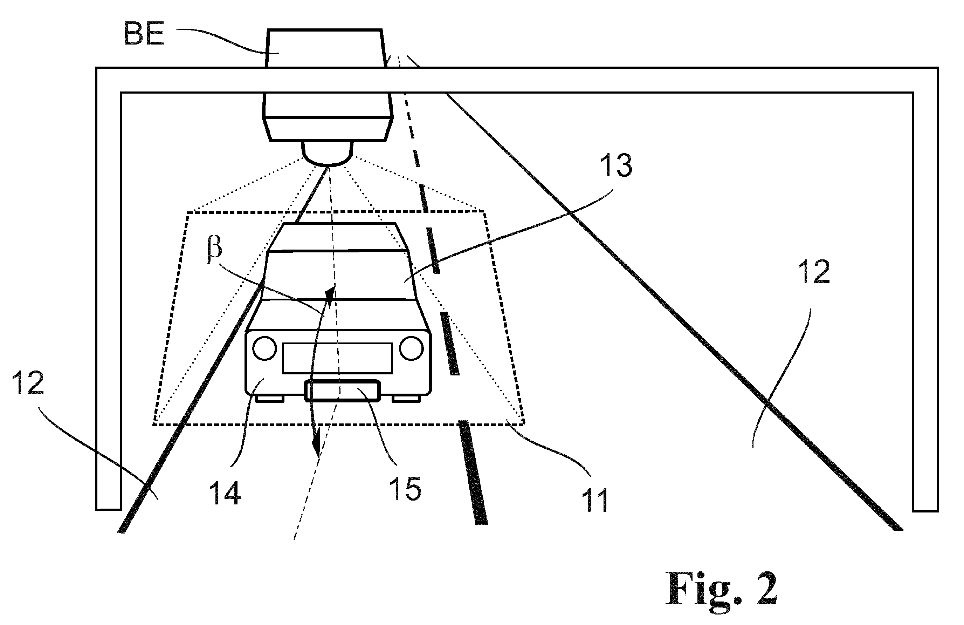

Eine Verwendung des Verfahrens und der Vorrichtung kann mit der in Fig. 2 dargestellten Anordnung erfolgen. Dazu ist in der Vorrichtung zur Aufnahme eines Kraftfahrzeugs 13 die Bilderfassungseinrichtung BE in Form einer Kamera 1 oberhalb der Fahrspur 12, unter einem Höhenwinkel β zur Fahrspur angeordnet. Der Bildbereich 11 der Kamera 1 ist dabei auf das auf sie zu fahrende Kraftfahrzeug 13 gerichtet, sodass eine perspektivische Ansicht mit der Frontansicht 14 und dem Nummernschild 15 in einem Bild 20 erfasst wird. Der Höhenwinkel β liegt dabei im Bereich 0° < β < 90°. Als besonders vorteilhaft erweist sich ein Bereich zwischen 20 ° und 45°.

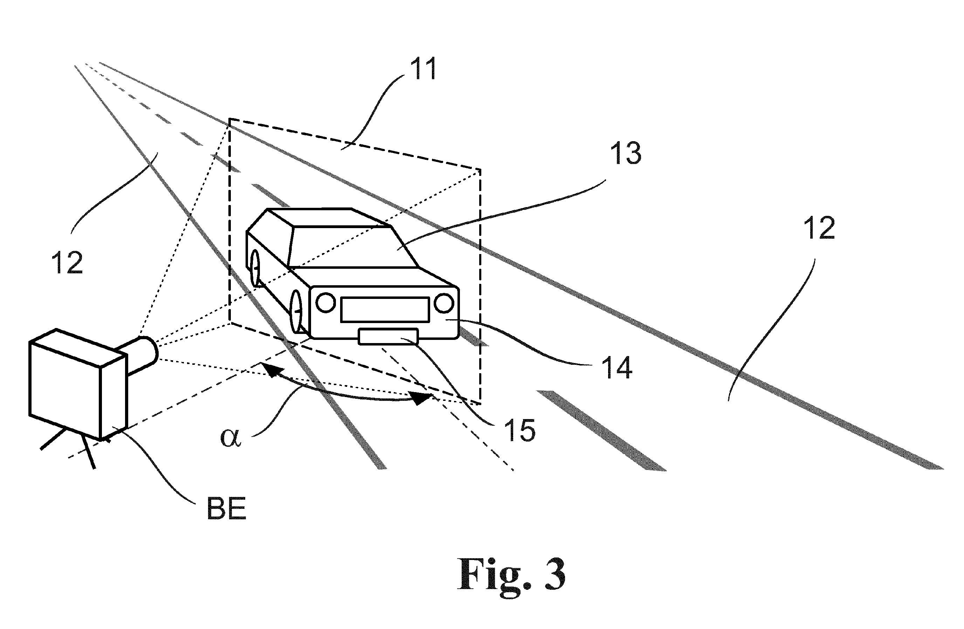

Eine weitere Ausführung des Verfahrens ist in Fig. 3 dargestellt. Die Bilderfassungseinrichtung BE ist in einem Winkel α seitlich zur Fahrspur 12 des Kraftfahrzeugs 13 angeordnet. Der Bildbereich 11 der Bilderfassungseinrichtung BE ist dabei auf das auf sie zu fahrende Kraftfahrzeug 13 gerichtet, sodass eine perspektivische Abbildung der Frontansicht 14 mit dem Nummernschild 15 und einer Seitenansicht im aufgenommenen Bild 20 erfasst wird. Für den seitlichen Winkel α gelten dieselben Bereichsangaben wie oben für den Höhenwinkel β.

In einer nicht dargestellten Variante des Verfahrens kann die Bilderfassungseinrichtung BE auch in einer seitlichen mit einem Winkel α zur Fahrspur 12 versehenen Position und in einer mit einem Winkel β zur Fahrspur 12 erhöhten Position angeordnet werden. In dieser Kombination kann dann einer der beiden Winkel auch den Betrag 0 annehmen, um zu den Spezialfällen der Fig. 2 und Fig. 3 zu gelangen.

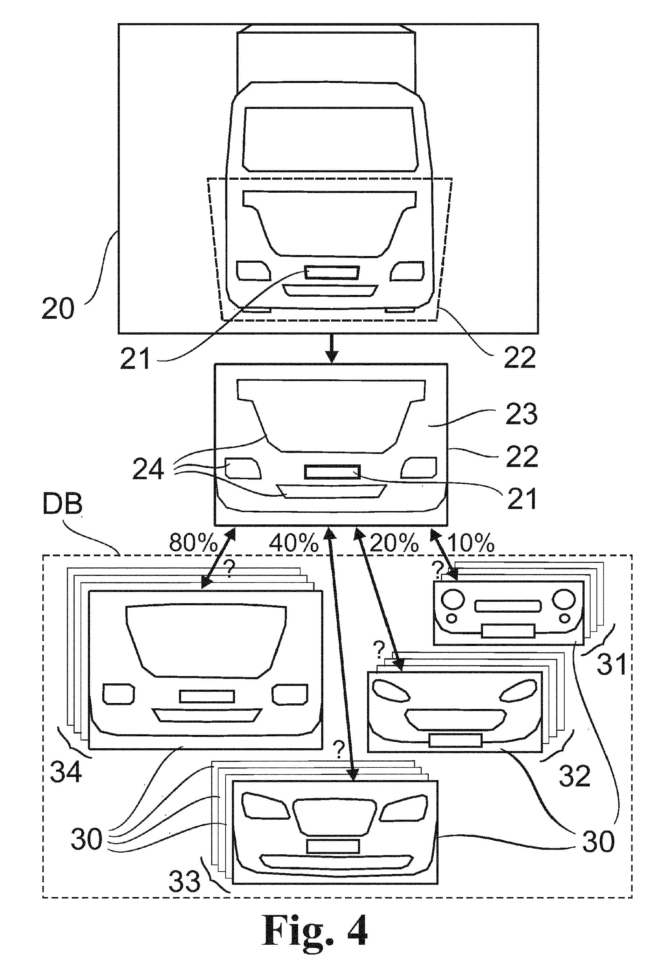

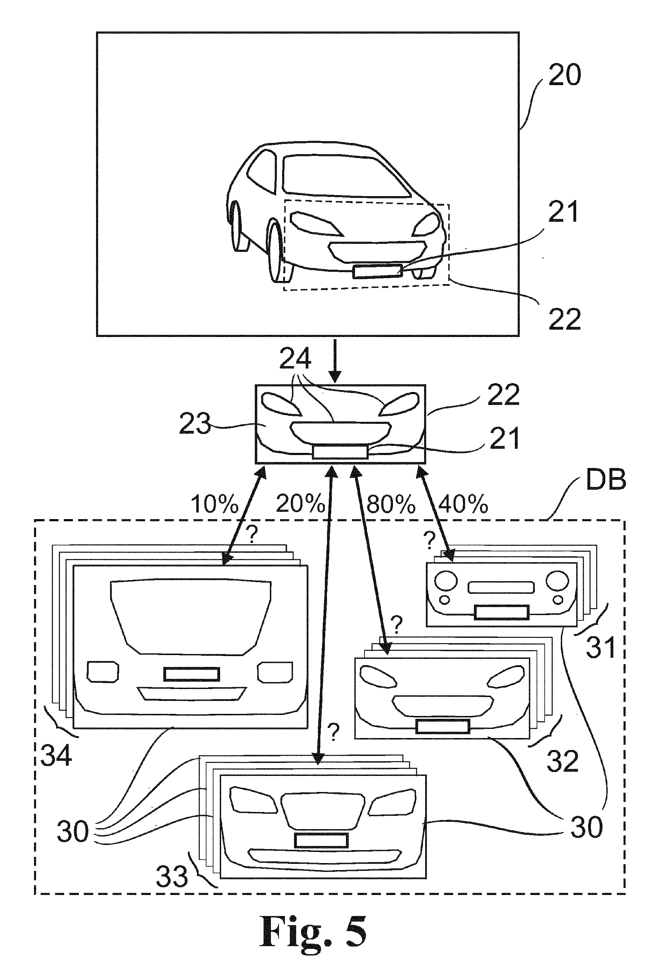

In Fig. 4 und Fig. 5 wird beispielhaft dargestellt, wie die Identifizierung eines Kraftfahrzeugs bei Aufnahmen aus verschiedenen Perspektiven erfolgt. Im Beispiel gemäß Fig. 4 wurde das aufgenommene Bild 20 mit einer über der Fahrspur 12 angeordneten Bilderfassungseinrichtung BE aufgenommen. Bei dem in Fig. 5 dargestellten Beispiel ist das Bild 20 mit einer seitlich zur Fahrspur 12 angeordneten Bilderfassungseinrichtung BE aufgenommen worden.

Innerhalb des perspektivisch verzerrten Bildes 20 des Kraftfahrzeugs 13 wird die Nummernschildposition und der Umriss des Nummernschilds 15 durch die Ermittlung von mindestens den vier Eckpunkten des Nummernschilds 15 erkannt und entsprechend des Umrisses eine Nummernschildkontur 21 erstellt. Die vier Eckpunkte spannen, je nach Anordnung der Bilderfassungseinheit BE ein unterschiedlich geformtes, schiefwinkliges Viereck auf. Für die Grundfunktion des Verfahrens ist keine Auswertung (OCR) des Nummernschildinhalts erforderlich.

Die Ermittlung der tatsächlichen Nummernschildgröße kann aus dem bekannten Wissen über die Abmessungen von Nummernschildern erfolgen und kann optional durch das zusätzliche Auswerten bekannter Abmessungen der Zeichengröße der Nummernschildbeschriftung ergänzt werden. Anhand dieser Zusatzinformationen wird das im Bild 20 vorliegende Nummernschildformat bestimmt.

Nach der Zuordnung des Nummernschildformats wird anhand eines Vergleichs des ermittelten Nummernschildformats und der im Bild 20 vorliegenden Perspektive der Nummernschildkontur 21 eine Berechnungsvorschrift zum perspektivischen Entzerren der Nummernschildkontur 21 und damit der Frontansicht 14 erstellt.

Nach Ermittlung des Nummernschildformats wird ein sich an der Größe und Lage der Nummernschildkontur 21 orientierender, in einem festgelegten Verhältnis und in einer bestimmten Position zur Nummernschildkontur 21 vergrößerter und in gleicher Weise perspektivisch verzerrter Bildbereich (Umriss der gesamten Fahrzeugfront, des Fahrzeughecks oder eines charakteristischen Ausschnitts davon, vorzugsweise in Form eines Rechtecks 22) aufgezogen. Die Ausdehnung des perspektivisch verzerrten Rechtecks 22 ist so gewählt, dass der wesentliche Teil der Frontansicht 14 (mindestens Kühler und Scheinwerfer enthaltend) in diesem Bildausschnitt erfasst wird. Der außerhalb des (perspektivisch verzerrten) Rechtecks 22 liegende Bildinhalt des perspektivisch aufgenommenen Bildes 20 wird verworfen und nur der innerhalb liegende Bildinhalt mit der Abbildung der Frontansicht 14 (oder eines Teils davon) für die weitere Bildauswertung verwendet.

Zur Schaffung von Vergleichsmöglichkeiten, erfolgt eine Parametrisierung der Frontansicht 14. Parametrisieren heißt in diesem Fall, dass die Positionen und Größen von charakteristischen Merkmalen in der Frontansicht 14 erfasst werden. Dazu werden mit Suchverfahren zur Kantenextraktion, z. B. durch Erstellen eines Kanten- bzw. Umrissbildes mittels Sobel-Filter, Konturen 24 innerhalb des Rechtecks 22 der extrahierten Frontansicht 14 des Kraftfahrzeugs 13 als charakteristische Merkmale erfasst. Diese Konturen 24 können beispielsweise von Umrissen oder Strukturen konstruktiver Elemente der Frontansicht 14, wie Scheinwerfern, Kühllufteinlässen, Stoßstangen, Karosserieabdeckungen oder Karosseriekanten usw., abgeleitet werden. Die Erstellung eines solchen Kantenbildes weist den Vorteil auf, dass Farb- und Helligkeitsschwankungen keinen maßgeblichen Einfluss auf die Bildauswertung haben.

Anhand der bereits ermittelten Berechnungsvorschrift wird das Rechteck 22 mit dem auf die Konturen 24 reduzierte Kantenbild perspektivisch entzerrt, auf die im Vergleich der Nummernschildformate ermittelte genormte Größe skaliert und eine entzerrte und parametrisierte Frontansicht 23 des Rechtecks 22 erstellt.

Nach der perspektivischen Entzerrung und einer Skalierung auf die in der Datenbank DB gespeicherten Referenzbilder 30 liegt dann eine direkt mit den Referenzbildern 30 vergleichbare Frontansicht 23 vor. Die Referenzbilder 30 der Datenbank DB weisen alle eine normierte Skalierung in Bezug auf Größe und Format der Nummernschildkontur 21 auf und beinhalten eine stilisierte Frontansicht 14 mit charakteristischen Merkmalen in Form von Konturen 24 ohne perspektivische Verzerrungen.

Die Datenbank DB beinhaltet eine solche Anzahl an typischen Referenzbildern 30, die ausreichend ist, um eine Kraftfahrzeugklasse identifizieren zu können. Wie in Fig. 4 und Fig. 5 dargestellt, kann es sich dabei um Bildaufnahmen mit charakteristischen Merkmalen von bestimmten Fahrzeugklassen handeln, die beispielsweise eingeteilt sind in eine Referenzbildklasse 31 für Kleinwagen, eine Referenzbildklasse 32 für Mittelklassewagen, eine Referenzbildklasse 33 für Kleintransporter und eine Referenzbildklasse 34 für Lastkraftwagen. Aus den Referenzbildklassen 31 bis 34 wird das Bild mit der größten Übereinstimmung zum aufgenommenen Bild ermittelt. Im Beispiel in Fig. 4 besteht die höchste Übereinstimmung mit dem Referenzbild 34 aus der Klasse der Lastkraftwagen. Im Beispiel in Fig. 5 besteht die höchste Übereinstimmung mit dem Referenzbild 32 aus der Klasse der Mittelklassewagen. Damit ist die Klasse des aufgenommenen Kraftfahrzeugs ermittelt und die Art des Kraftfahrzeug eindeutig identifiziert. Die ermittelte Kraftfahrzeugklasse wird als Ergebnis des Verfahrens ausgegeben.

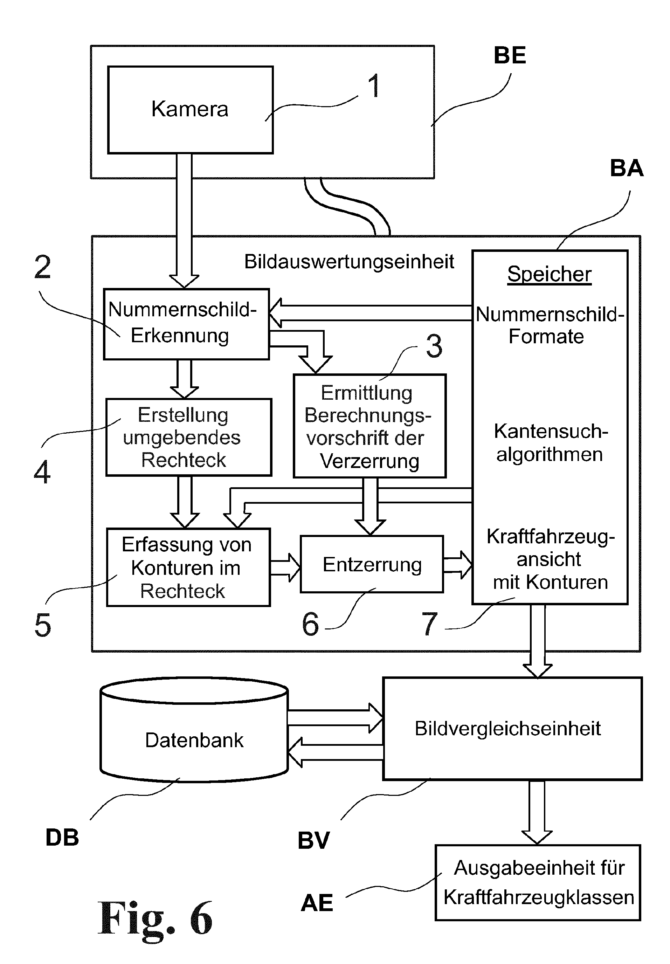

In Fig. 6 wird der Aufbau der erfindungsgemäßen Vorrichtung anhand eines Blockschemas verdeutlicht. Die Vorrichtung umfasst die Funktionseinheiten Bilderfassungseinrichtung BE mit einer Kamera 1, Bildauswertungseinheit BA, Bildvergleichseinheit BV, eine Datenbank DB mit Referenzbildern 30 und eine Ausgabeeinheit AE.

Die Bildaufnahme erfolgt mit der Kamera 1. In einem vorteilhaften Aufbau stellt die Bilderfassungseinrichtung BE eine separate, an der Vorrichtung mit einem flexiblen Kabel angeschlossene Einheit dar.

In der Bildauswertungseinheit BA erfolgt die Erfassung und Auswertung der Merkmale des aufgenommenen Bildes 20. Dafür sind sechs spezialisierte Module vorgesehen.

In einem Erkennungsmodul 2 erfolgt zunächst die Lokalisierung des Nummernschilds in der Kraftfahrzeugansicht des Kraftfahrzeugs. Durch die Erkennung von mindestens den vier Eckpunkten des Nummernschilds wird eine der abgebildeten, perspektivisch verzerrten Nummernschildumrandung entsprechende Nummernschildkontur 21 erzeugt.

Die Ermittlung des tatsächlichen Nummernschildformats kann aus dem bekannten Wissen über die genormten Abmessungen von Nummernschildern 15 erfolgen und kann optional durch das zusätzliche Auswerten genormter Abmessungen der Zeichengröße der Nummernschildbeschriftung ergänzt werden. Mit diesen Informationen kann in einem Berechnungsmodul 3 das Format des aufgenommenen Nummernschilds 15 anhand eines Vergleichs mit den im Speicher 7 der Bildauswertungseinheit BA hinterlegten, genormten Nummernschildformate ermittelt werden und aus den Formabweichungen eine Berechnungsvorschrift für die Entzerrung des Bildes in Bezug auf die perspektivisch aufgenommene Frontansicht 14 abgeleitet werden. Alternativ kann dasselbe Prinzip auch für das Fahrzeugheck in gleicher Weise anwendet werden.

In Abhängigkeit vom ermittelten Nummernschildformat wird in einem Auswahlmodul 4 ein Rechteck 22 um die Nummernschildkontur 21 gelegt und dieses in Bezug zur Nummernschildkontur 21 auf eine vorgegebenen Lage und Vergrößerung aufgezogen. Zur Reduktion der zu verarbeitenden Datenmenge wird der innerhalb des Rechtecks 22 liegende Bildinhalt extrahiert und der restliche Bildinhalt verworfen. Danach erfolgt durch Skalieren der Bildgröße eine Adaption des extrahierten Bildausschnitts (Rechteck 22) an das gespeicherte Format der Referenzbilder 30 der Datenbank DB.

In einem Filtermodul 5 erfolgt die Ermittlung charakteristischer Merkmale des aufgenommenen Kraftfahrzeugs 13. Die Erkennung erfolgt durch Anwendung gebräuchlicher Bildverarbeitungsverfahren zur Kantenextraktion, beispielsweise mit einem Sobel-Filter, mit dem die Konturen 24 anhand von Helligkeits- oder Kontrastunterschieden einschließlich der daraus abgeleiteten Gradienten aus dem Rechteck 22 der Kraftfahrzeugfront herausgestellt werden. Dadurch entsteht eine auf die Konturen 24 reduzierte Frontansicht 23.

Außerdem weist die Bildauswertungseinheit BA ein Geometriemodul 6 auf, in dem die perspektivische Entzerrung des Rechteck 22 mittels der im Berechnungsmodul 3 erzeugten Berechnungsvorschrift erfolgt. Das nunmehr direkt mit den Referenzbildern 30 der Datenbank DB vergleichbare Frontansicht 23 wird im Speicher 7 der Bildauswertungseinheit BA abgelegt und an die Bildvergleichseinheit BV übergeben.

In der Bildvergleichseinheit BV wird das bearbeitete Bild (entzerre und parametrisierte Frontansicht 23 mit Konturen 24) mit den Referenzbildern 30 der Datenbank DB auf Ähnlichkeit geprüft. Die Datenbank DB beinhaltet eine solche Anzahl an typischen Referenzbildern 30, die ausreichend ist um eine Kraftfahrzeugklasse identifizieren zu können. Außerdem ist es auch möglich, bereits mit Kantenextraktionsverfahren bearbeitete und klassifizierte Referenzbilder 30 in der Datenbank DB zu speichern. Das Referenzbild 30 mit der größten Übereinstimmung wird ermittelt und die diesem zugeordnete Kraftfahrzeugklasse als Ergebnis der Identifikation des aufgenommenen Kraftfahrzeugs zugewiesen. Das Ergebnis kann an der Ausgabeeinheit AE der Vorrichtung ausgelesen werden.

Die den Referenzbildern 30 zugeordneten Referenzbilderklassen 31 - 34 können jedoch auch vielfältig abgewandelt werden. In einer modifizierten Variante des Verfahrens kann durch den Vergleich charakteristischer Merkmale und Konturen 24 auch eine Einteilung der Kraftfahrzeuge nach Fahrzeugherstellern erfolgen.

In einer weiteren Variante wird das Verfahren für die Verkehrszählung verwendet. Das kann in Form einer mobilen Einheit erfolgen, die ohne großen Aufwand bei der Aufstellung und Einrichtung der Vorrichtung neben einer Fahrspur positioniert wird. Durch die Identifizierung der Kraftfahrzeugklasse ist es möglich, die Zusammensetzung des überwachten Verkehrs zu ermitteln. Aus der Anzahl der erfassten Kleinwagen, Mittelklassewagen, Oberklassewagen, Kleintransporter, Lastkraftwagen usw. kann dann beispielsweise eine statistische Auswertungen erfolgen.

Im Fall eines Einsatzes des Verfahrens zur Verkehrsverstoßahndung, beispielsweise im Zusammenhang mit einer Geschwindigkeitsmessung, ist es sinnvoll, auch die auf dem Nummernschild dargestellte Registriernummer des Kraftfahrzeugs 13 für die Identifikation zu erfassen. Dazu kann das Verfahren um einen zusätzlichen Verfahrenschritt erweitert werden, mit dem eine Erkennung mit einem OCR-Verfahren des Nummernschilds 15 realisierbar ist.

### Bezugszeichenliste

- BE: Bilderfassungseinrichtung
- BA: Bildauswertungseinheit
- BV: Bildvergleichseinheit
- DB: Datenbank mit Referenzbilder
- AE: Ausgabeeinheit
- α, β: Winkel der Bilderfassungseinrichtung zur Fahrspur

- 1: Kamera
- 11: Bildbereich der Bilderfassungseinrichtung
- 12: Fahrspur
- 13: Kraftfahrzeug
- 14: Frontansicht (Kraftfahrzeugansicht, nummernschildbesetzt)
- 15: Nummernschild
- 2: Erkennungsmodul
- 3: Berechnungsmodul
- 4: Auswahlmodul
- 5: Filtermodul
- 6: Geometriemodul
- 7: Speicher

- 20: aufgenommenes Bild
- 21: Nummernschildkontur
- 22: Rechteck (Bildbereich)
- 23: Frontansicht (entzerrt und parametrisiert)
- 24: Kontur
- 30: Referenzbilder
- 31: Referenzbildklasse für Kleinwagen
- 32: Referenzbildklasse für Mittelklassewagen
- 33: Referenzbildklasse für Kleintransporter
- 34: Referenzbildklasse für Lastkraftwagen

## Patentansprüche

1. Verfahren zur Identifikation von Kraftfahrzeugen zur Verkehrsüberwachung, mit den Schritten:
a) Aufnehmen eines perspektivischen Bildes (20) eines Kraftfahrzeugs (13) unter einem spitzen Winkel (α, β) zur Fahrspur (12), wobei das aufgenommene Bild (20) mindestens eine Kraftfahrzeugansicht (14) enthält, die ein Nummerschild (15) aufweist,
b) Erkennen des Nummernschilds (15) im aufgenommenen Bild (20) und Erfassen einer Nummernschildkontur (21),
c) Ermitteln des Formats der Nummernschildkontur (21) aus dem Vergleich der Eckpunkte der Nummernschildkontur (21) mit gespeicherten genormten Nummernschildformaten aus einem Speicher (7),
d) Ermitteln einer Berechnungsvorschrift zum perspektivischen Entzerren der Nummernschildkontur (21) anhand des zugeordneten genormten Nummernschildformats,
e) Erzeugen eines zur Nummernschildkontur (21) angepasst perspektivisch verzerrten Bildbereichs (22) mit einer vorgegebenen Vergrößerung in Abhängigkeit vom ermittelten Format der Nummernschildkontur (21),
f) Extrahieren des Inhalts des verzerrten die Nummernschildkontur (21) umgebenden Bildbereichs (22) und Verwerfen des restlichen aufgenommenen Bildes (20) des Kraftfahrzeugs (13),
g) Adaptieren einer aus dem verzerrten umgebenden Bildbereich (22) extrahierten, nummernschildbesetzten Kraftfahrzeugansicht (14) an das Format von in einer Datenbank (DB) gespeicherten Referenzbildern (30),
h) Entzerren der Kraftfahrzeugansicht (14) mittels der aus der Nummernschildkontur (21) ermittelten Berechnungsvorschrift,
i) Ähnlichkeitsvergleich der erfassten Konturen (24) und deren Lage mit denen von Referenzbildern (30) aus der Datenbank (DB) und Erkennen der größten Übereinstimmung der erfassten Konturen (24) zu einem der Referenzbilder (30),
j) Einordnen des aufgenommenen Kraftfahrzeugs (13) in eine Referenzbildklasse (31; 32; 33; 34), der das Referenzbild (30) mit der größten Übereinstimmung zugeordnet war, und Ausgeben einer aus der Referenzbildklasse (31; 32; 33; 34) abgeleiteten Kraftfahrzeugklasse.

2. Verfahren nach Anspruch 1, wobei beim Erzeugen des umgebenden Bildbereichs (22) dessen Größenverhältnis und Lage gegenüber der Nummernschildkontur (21) aus dem ermittelten genormten Nummernschildformat abgeleitet werden.

3. Verfahren nach Anspruch 1, wobei nach dem Extrahieren des umgebenden verzerrten Bildbereichs (22) charakteristische Merkmale in Form von Konturen (24) innerhalb der extrahierten nummernschildbesetzten Kraftfahrzeugansicht (14) erfasst werden.

4. Verfahren nach Anspruch 1, wobei zum Ähnlichkeitsvergleich der erfassten Konturen (24) mit den gespeicherten Referenzbildern (30) ein Korrelationsverfahren eingesetzt wird.

5. Verfahren nach Anspruch 1, wobei zum Ähnlichkeitsvergleich der erfassten Konturen (24) mit den gespeicherten Referenzbildern (30) die Lagen, Abstände und Größenverhältnisse der Konturen (24) gegenüber Nummernschildkontur (21) verglichen werden.

6. Verfahren nach Anspruch 1, wobei die Bildaufnahme unter einem seitlichen Winkel (α) zur Fahrspur (12) erfolgt und das Kraftfahrzeug (13) in einer perspektivischen Ansicht aufgenommen wird.

7. Verfahren nach Anspruch 1, wobei die Bildaufnahme unter einem Höhenwinkel (β) zur Fahrspur (12) erfolgt und das Kraftfahrzeug (13) in einer perspektivischen Ansicht aufgenommen wird.

8. Verfahren nach Anspruch 6 oder 7, wobei der Winkel (α; β) zwischen der Fahrspur (12) und der Bilderfassungseinrichtung (BE) maximal so groß gewählt wird, dass die nummernschildbesetzte Kraftfahrzeugansicht (14) noch eine hinreichend große Fläche der Nummernschildkontur (21) aufweist, die eine eindeutige Zuordnung der genormten Nummerschildformate gestattet und somit eine die perspektivische Entzerrung von der Kenntnis des Winkels (α; β) der Bildaufnahme zur Fahrspur (12) des Kraftfahrzeugs (13) unabhängig ist.

9. Verfahren nach Anspruch 1, wobei für die Ermittlung des genormten Nummernschildformats zusätzlich zur Nummernschildkontur (21) die Lage und Größe der Beschriftung des Nummernschilds (15) erfasst wird.

10. Verfahren nach Anspruch 1, wobei zusätzlich zur Nummernschildkontur (21) die Registriernummer des aufgenommenen Nummernschilds (15) erfasst, einem OCR-Verfahren unterzogen und für die Verfolgung eines Verkehrsverstoßes gespeichert wird.

11. Verfahren nach Anspruch 10, wobei zusätzlich zur Bildaufnahme noch weitere Messdaten im Zusammenhang mit einem Verkehrsverstoß, Datum und Uhrzeit gleichzeitig erfasst und mit Bezug auf das aufgenommene Bild (20) des Kraftfahrzeugs (13) gespeichert werden, indem diese Daten in einer Scriptzeile direkt im Bild oder in einem Datencontainer innerhalb der Bilddatei abgelegt werden.

12. Vorrichtung zur Identifikation von Kraftfahrzeugen zur Verkehrsüberwachung mit einer Bilderfassungseinrichtung (BE), einer Bildauswertungseinheit (BA) mit Speicher (7), einer Bildvergleichseinheit (BV), einer Datenbank (DB) mit Referenzbildern (30) und einer Ausgabeeinheit (AE), wobei die Bilderfassungseinrichtung (BE) zur Aufnahme eines Bildes (20) des Kraftfahrzeugs (13) mit mindestens einer Kraftfahrzeugansicht (14), die ein Nummernschild (15) aufweist, ausgerichtet ist, wobei
die Bildauswertungseinheit (BA)
- Mittel zum Erkennen des Nummernschilds (15),
- Mittel zum Abtrennen des Bildhintergrundes und Extrahieren einer relevanten Kraftfahrzeugansicht vom aufgenommenen Bild (20),
- Mittel zum Erfassen charakteristischer Merkmale innerhalb der
extrahierten Kraftfahrzeugansicht enthält, und
die Bildvergleichseinheit (BV)
- Mittel zum Ähnlichkeitsvergleich der charakteristischen Merkmale der extrahierten Kraftfahrzeugansicht mit denen von Referenzbildern (30) aus einer Datenbank (DB),
- Mittel zum Erkennen der größten Übereinstimmung der Kraftfahrzeugansicht zu einer der Referenzbilder (30) und
- Mittel zum Zuordnen des ermittelten Referenzbildes (30) mit der größten
Übereinstimmung zu einer Kraftfahrzeugklasse aufweist,
**dadurch gekennzeichnet, dass** die Bildauswertungseinheit (BA) weiterhin enthält:
- Mittel zur Feststellung der Größenverhältnisse einer Nummernschildkontur (21) im perspektivisch verzerrten Bild (20) auf Basis von gespeicherten genormten Nummernschildformaten,
- Mittel zur Feststellung der Größe der perspektivischen Verzerrung der Nummernschildkontur (21) anhand des zugeordneten genormten Nummernschildformats,
- Mittel zum Erstellen einer Berechnungsvorschrift zum perspektivischen Entzerren auf Basis der ermittelten Verzerrung der Nummernschildkontur (21) gegenüber dem zugeordneten Nummernschildformat sowie
- Mittel zum Entzerren der extrahierten nummernschildbesetzten Kraftfahrzeugansicht (14), wobei die Berechnungsvorschrift zur Entzerrung der Nummernschildkontur (21) zur Entzerrung der gesamten extrahierten nummernschildbesetzten Kraftfahrzeugansicht (14) vorgesehen ist, sodass die perspektivische Entzerrung von der genauen Kenntnis des Winkels (α; β) der Bildaufnahme zur Fahrspur (12) des Kraftfahrzeugs (13) erreicht wird.

13. Vorrichtung nach Anspruch 12, **dadurch gekennzeichnet, dass** die Bildauswertungseinheit (BA) Mittel zum Erzeugen eines zur Nummernschildkontur (21) angepasst perspektivisch verzerrten umgebenden Bildbereichs (22) zur Extraktion der auszuwertenden nummernschildbesetzten Kraftfahrzeugansicht (14) aus dem aufgenommenen Bild (20) aufweisen, wobei die Mittel zum Erzeugen des umgebenden Bildbereichs (22) eine Einstellung der Größe des Bildbereichs (22) gegenüber der Nummernschildkontur (21) in Abhängigkeit von dem der Nummernschildkontur (21) zugeordneten genormten Nummernschildformat enthalten.

14. Vorrichtung nach Anspruch 13, **dadurch gekennzeichnet, dass** die Bildauswerteeinheit (BA) Mittel zur Feststellung von charakteristischen Merkmalen in Form von Konturen (24) innerhalb des erzeugten umgebenden Bildbereichs (22) aufweist und das Ergebnis aus den Mittel zur Feststellung der Konturen (24) den Mitteln zur Entzerrung der extrahierten nummernschildbesetzten Kraftfahrzeugansicht (14) zugeführt ist.

15. Vorrichtung nach Anspruch 12, **dadurch gekennzeichnet, dass** die Vorrichtung zusätzlich ein Messsystem zur Geschwindigkeitsfeststellung des Kraftfahrzeugs (13) sowie Mittel zur Erkennung der Registriernummer innerhalb der Nummernschildkontur (21) aufweist.
